# DEMANDE DE BREVET EUROPEEN

(11) **EP 1 762 279 A1**
(43) Date de publication de la demande: **14.03.2007**
(21) Numéro de dépôt: 05291849.7
(22) Date de dépôt: 07.09.2005
(51) Int. Cl.: A63B 55/08, A63B 55/00

(54) **Equipement de golf comprenant un sac de golf et un chariot de support de celui-ci**

(71) Demandeur: Baruffi, Walter, 78580 Bazemont (FR)
(72) Inventeur: Baruffi, Walter, 78580 Bazemont (FR); Selle Sébastien, 92110 Clichy (FR)
(74) Mandataire: Berger, Helmut

(57) **Abrégé**

L'invention concerne un équipement de golf.

Cet équipement est du type comprenant un sac de golf (2) de forme sensiblement cylindrique (15) fermé à son extrémité inférieure par une paroi de fond (15) et un chariot de golf (1) qui comporte une colonne (8) de support du sac de golf (1), un châssis (3) à roues (4) porteur de la colonne, pour le déplacement du chariot sur le sol, et des dispositifs supérieur (13) et inférieur (14) de fixation et de retenue du sac (2) sur la colonne (8), le dispositif de fixation inférieure (14) étant pourvu d'un organe d'appui (21) de la paroi de fond (15) du sac. L'équipement est caractérisé en ce qu'au moins l'un des dispositifs de fixation supérieur (13) et inférieur (14) comporte, disposé en partie sur la colonne (8) et en partie sur le sac de golf (2), des moyens de fixation rapide par engagement et désengagement mutuels par un mouvement du sac.

L'invention est utilisable pour jouer au golf.

## Description

L'invention concerne un équipement de golf tel que décrit dans le préambule de la revendication 1.

Les équipements de golf de ce type, qui sont connus, présentent l'inconvénient majeur que leurs dispositifs de fixation, aussi bien supérieur qu'inférieur, présentent une structure complexe comportant un organe en forme d'un arc d'appui, solidaire de la colonne et s'étendant perpendiculairement à celui-ci, et, associé à chacun de ces organes, une sangle de fixation et de retenue du sac sur l'arc d'appui. A cette fin, chaque sangle est reliée à l'arc d'appui et est destinée à entourer le sac.

Il ressort de la description qui précède des équipements de golf connus qu'à l'inconvénient de la structure complexe s'ajoute que la mise en place du sac sur le chariot et son enlèvement nécessitent un nombre de gestes important et est donc relativement malaisé.

L'invention a pour but de proposer un chariot du type défini plus haut, qui pallie les inconvénients des chariots connus, qui viennent d'être énoncés.

Pour atteindre ce but, l'équipement de golf selon l'invention comporte les caractéristiques énoncées dans la partie caractérisante de la revendication 1.

D'autres caractéristiques de l'invention seront indiquées dans la revendication dépendante.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un chariot de golf de transport et de support d'un sac de golf, représenté à l'état séparé sur cette figure ;
- la figure 2 est une vue latérale du chariot de la figure 1, avec le sac de golf à l'état monté sur le chariot ;
- la figure 3 est une vue en direction de la flèche III de la figure 2 ;
- la figure 4 est une vue en perspective de l'organe d'appui indiqué en IV sur la figure 1 ;
- la figure 5 est une vue en perspective du détail de la partie indiquée en V sur la figure 2 avant la mise en place du sac sur le chariot;
- la figure 6 est une vue de dessus, de la partie indiquée en VI sur la figure 1, et
- la figure 7 est une vue en perspective d'une autre version de réalisation du dispositif de fixation supérieur du sac de golf sur le chariot.

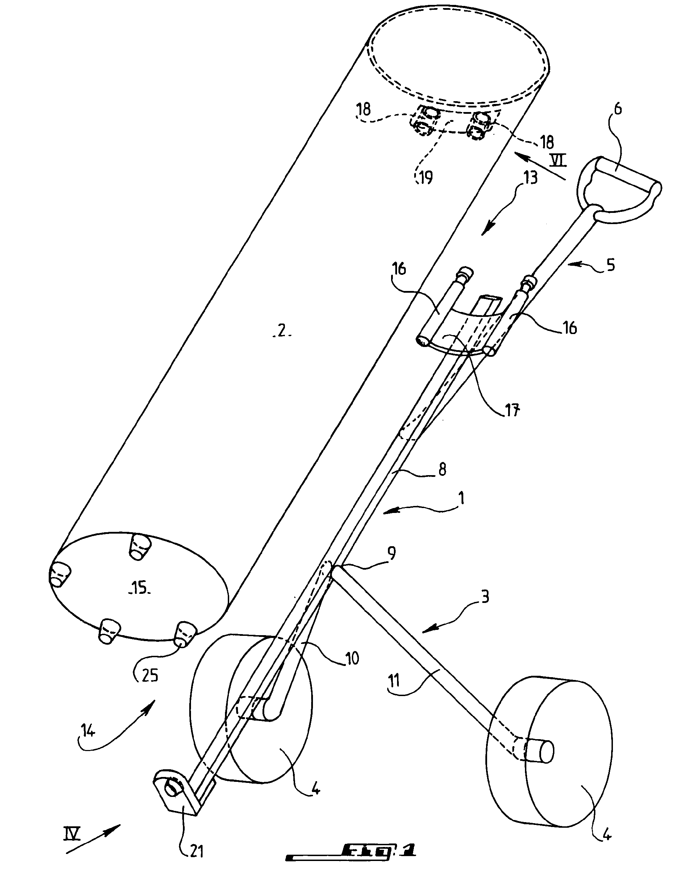

En se référant à la figure 1, on constate que le chariot selon l'invention comporte essentiellement une partie 1 de support d'un sac de golf 2, un châssis 3 à deux roues 4 sur lequel est fixée la partie de support 1 et qui permet le déplacement du chariot sur le sol, ainsi qu'une partie 5 pourvue d'une poignée 6 pour pouvoir manoeuvrer le chariot.

Comme on le voit clairement sur la figure, la partie de support 1 est essentiellement formée par une colonne 8 avantageusement une barre tubulaire à section transversale rectangulaire, qui est montée en 9 sur le châssis 3. Ce dernier comporte un dispositif de deux barres 10, 11 en forme d'un V. La colonne 8 est fixé sur la pointe 9 du V, tandis que les deux roues 4 sont chacune montée rotative sur une extrémité libre de ce dispositif en V.

Le dispositif de manoeuvre 5 est constitué essentiellement d'une tige 13 dont une extrémité est solidarisée du tronc 8 et dont l'autre porte la poignée 6. La tige 5 est inclinée par rapport à la colonne 8, d'un angle prédéterminé, choisi pour rendre aisé le maniement du chariot.

La colonne 8 comporte au niveau de ses extrémités supérieure et inférieure une partie des dispositifs de fixation supérieur 13 et inférieur 14 du sac de golf 2. Comme il ressort de la figure, celui-ci présente une forme générale cylindrique ouverte en haut et fermée en bas par une paroi de fond indiqué en 15.

Le dispositif de fixation supérieur 13 comporte, dans la version de réalisation représentée sur la figure 1, deux petits axes ou tiges 16 parallèles, l'un à l'autre et à l'axe de la colonne 8, qui sont supportés par une plaque 17 fixée sur la partie d'extrémité supérieure de la colonne et, montées sur l'extrémité supérieure du sac 2, deux douilles 18 parallèles et disposées de façon qu'elles puissent être engagées axialement sur les axes 16. Les douilles 18 sont fixées par l'intermédiaire d'une pièce de support 19, directement sur la surface extérieure du sac ou sur une pièce de renforcement solidaire du sac. Pour faciliter l'emmanchement des douilles 18 sur les axes 16, leurs extrémités avant peuvent être coniques en s'élargissant en direction de l'extrémité.

Le dispositif de fixation inférieur 14 comporte essentiellement un organe d'appui 21 qui est fixé sur l'extrémité inférieure de la colonne 8, s'étend perpendiculairement au plan défini par les deux axes 16, du même côté de la colonne que ces axes. Une particularité essentielle de l'invention réside dans le fait que cet organe d'appui 21 comporte un creux ou un trou 22, dans le cas représenté de forme tronconique, s'élargissant en direction de la face d'appui 23 en regard du fond 15 du sac 2. Ce creux ou trou 22 est destiné à recevoir un plot 25, de forme complémentaire, dans le cas présent donc tronconique, qui est monté sur la surface extérieure de la paroi de fond 15 en faisant saillie de celle-ci, sensiblement parallèlement à l'axe du sac, de façon que son axe coïncide avec l'axe du trou 22 lorsque le sac 2 est placé sur le chariot, avec les douilles 18 engagées sur les axes 16 au niveau supérieur du sac. La surface de fond du sac est pourvue de plusieurs plots 25, répartis d'une façon avantageusement uniforme pour que le sac puisse aussi reposer de façon stable sur le sol.

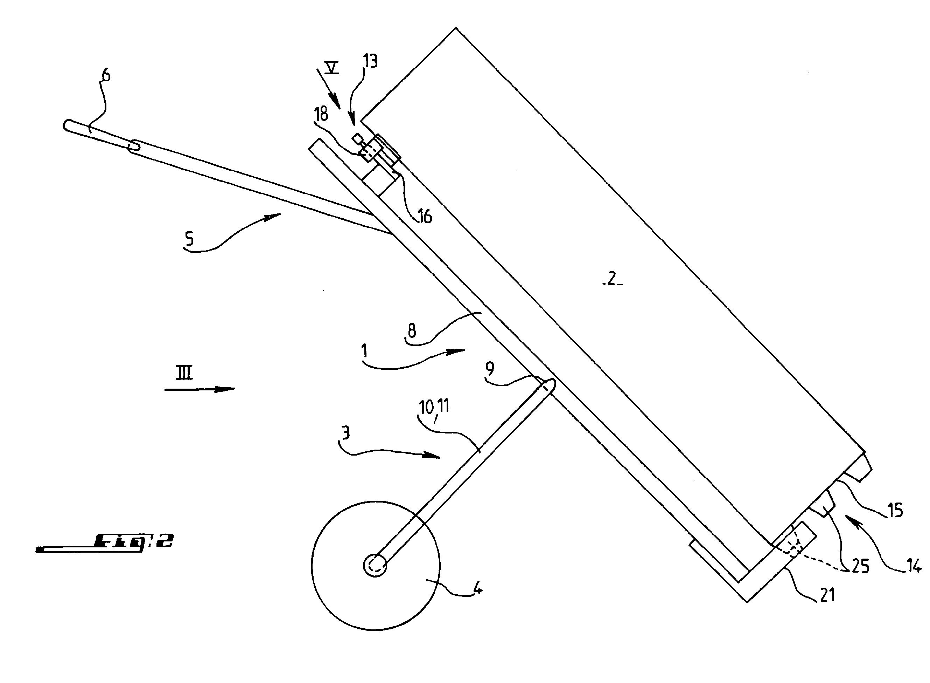

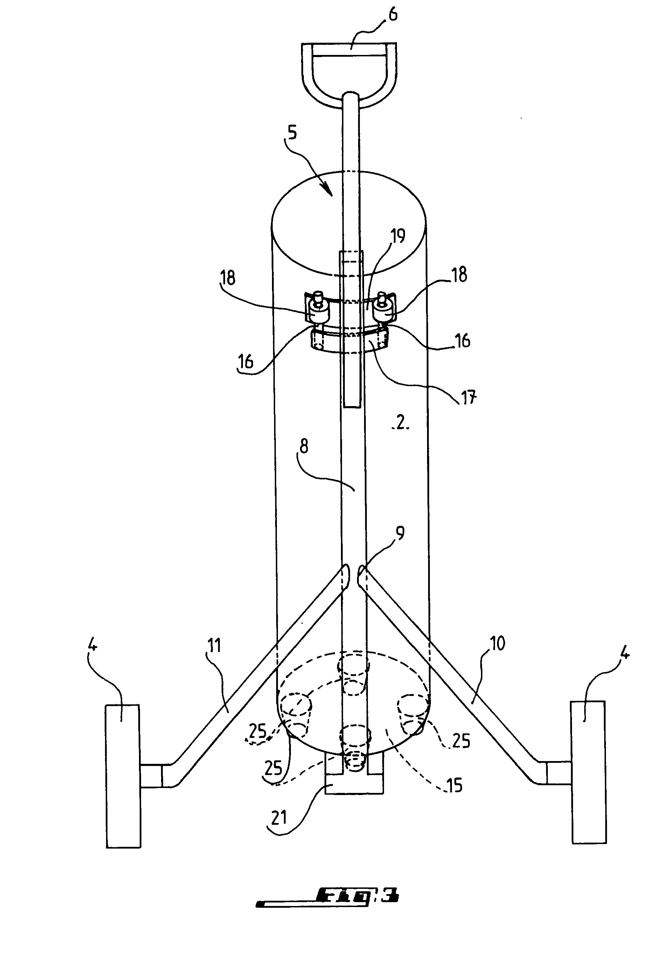

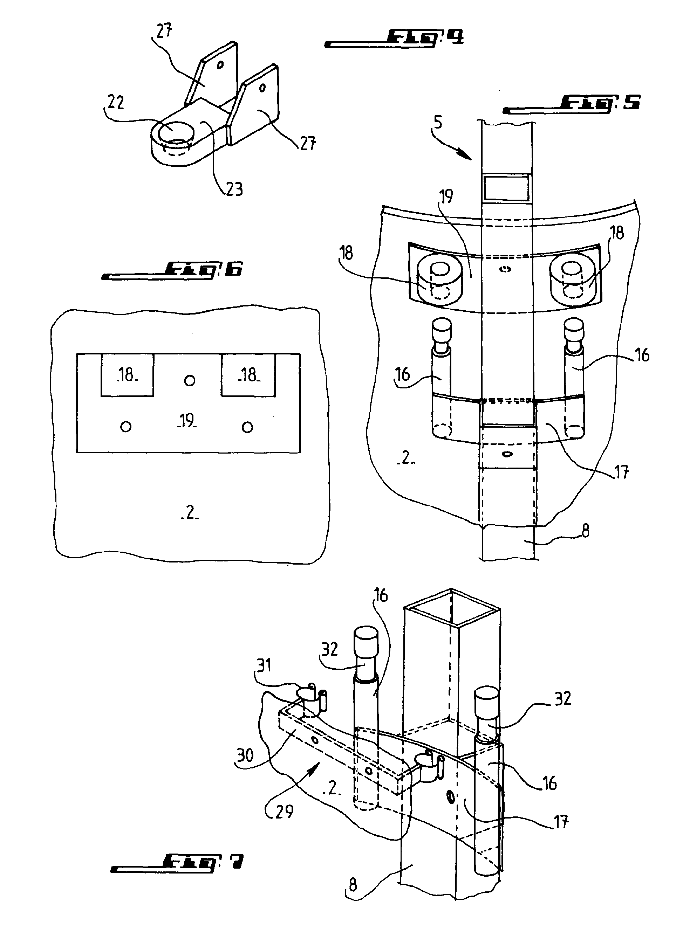

Concernant l'organe d'appui 21, il peut être réalisé de diverses manières, par exemple sous forme d'un L dont la branche exempte du trou 22 pourrait alors servir pour son montage sur l'extrémité inférieure de la colonne 8. Une autre variante de réalisation est représentée sur la figure 4. Dans ce cas, la fixation à la colonne se fait à l'aide de deux plaquettes latérales 27 solidaires chacune d'un bord latéral de l'élément d'appui 21 alors en forme d'une pièce plate, et écartée de façon que la colonne puisse être engagée entre les deux plaquettes 27 pour que celles-ci puissent être fixées chacune sur une face latérale appropriée de la colonne.

On comprend aisément que la mise en place du sac 2 sur le chariot se fait par un simple mouvement axial du sac assurant l'engagement des douilles 18 sur les axes 16 et du plot approprié 25 dans le trou 22 de l'organe d'appui 21. L'enlèvement du sac est obtenu par un mouvement dans le sens inverse.

La figure 7 illustre un autre mode de réalisation du dispositif de fixation supérieur 13. Conformément à cette figure, la partie prévue sur le sac comporte, à la place de l'ensemble formé par les douilles 18 et leur plaque de support 19, une pièce en forme d'un U 29 dont la base 30 est destinée à être fixée sur la face périphérique cylindrique du sac 2, de toute manière appropriée, soit directement, soit par l'intermédiaire d'une pièce de renforcement, et dont les extrémités des branches latérales portent chacune un élément 31 de montage amovible rapide, en forme d'agrafe susceptible d'être placé amoviblement sur les axes 16 solidaires de la colonne, par un mouvement perpendiculaire à ces axes.

Plus précisément, dans l'exemple représenté, chaque agrafe 31 est formée par une pièce en forme d'un C dont les branches sont élastiquement déformables, avec écartement élastique des extrémités, de façon à pouvoir s'engager de façon amovible dans des rainures 32 de forme complémentaire prévue sur les axes 16.

On comprend aisément que dans ce cas aussi la mise en place du sac de golf 2 sur le chariot 1 se fait d'une façon très simple par engagement tout d'abord du plot approprié 25 en bas du sac dans le trou 22 de l'organe d'appui 21 et ensuite par un déplacement latéral du sac assurant l'engagement des agrafes 31 du sac dans les rainures 32 des axes 16 montés sur le chariot 1. Pour enlever le sac de son chariot, il suffit de tirer l'extrémité supérieure du sac, perpendiculairement à son axe, dans la direction d'éloignement de la colonne, pour que les agrafes 31 puissent se dégager de leur rainure 32 et le sac retrouver sa possibilité de déplacement axial. N'étant ainsi plus verrouillé axialement sur le chariot, un petit mouvement axial d'une distance correspond à la hauteur du plot 25 suffit pour dégager celui-ci de la plaque d'appui 21.

Il va de soi que la description de l'invention, qui vient d'être faite en se référant aux figures n'a été donnée qu'à titre d'exemple. De multiples modifications peuvent être apportées sans sortir du cadre de l'invention. Ainsi, au lieu d'être prévus sur le chariot, les axes pourraient être disposés sur le sac et les douilles sur le chariot. De façon similaire, le plot en saillie du dispositif de fixation inférieur pourrait être placé sur l'organe d'appui et le creux ou le trou d'engagement complémentaire dans la paroi du fond du sac. On pourrait également envisager d'utiliser à titre de dispositif de fixation inférieur à l'extrémité du sac, sur sa face périphérique, un organe en forme d'agrafe correspondant par exemple à une agrafe 31 qui s'engagerait alors amoviblement sur l'extrémité inférieure de la colonne du chariot. En prévoyant en haut du sac un dispositif tel que représenté sur la figure 7, la mise en place du sac sur le chariot pourrait alors se faire uniquement par un mouvement du sac perpendiculaire à la colonne. Pour assurer dans ce cas aussi un verrouillage du sac dans la direction parallèle à la colonne, il suffirait alors de prévoir en haut de cette dernière un élément de butée à l'endroit approprié. Pour rendre le chariot adaptable à différentes hauteurs de sac, par exemple, la plaque 17 de support des axes 16 pourrait être déplaçable sur la colonne et sélectivement fixée dans différentes positions le long de la colonne, de toute manière connue appropriée. On pourrait également envisager de rendre variable la longueur des axes qui pourraient alors par exemple être formés par deux éléments dont l'un est engagé téléscopiquement dans l'autre. Bien entendu, au lieu d'utiliser deux axes, on pourrait, le cas échéant, en utiliser qu'un seul. De façon générale, le moyen de fixation sur la colonne pourrait être variable le long de celle-ci. L'invention est également applicable à des sacs de golf qui ont une forme non cylindrique.

## Revendications

1. Equipement de golf comprenant un sac de golf (2) notamment de forme sensiblement cylindrique fermé à son extrémité inférieure par une paroi de fond (15) et un chariot de golf (1) qui comporte une colonne (8) de support du sac de golf (2), un châssis (3) à roues (4) porteur de la colonne, pour le déplacement du chariot sur le sol, et des dispositifs supérieur (13) et inférieur (14) de fixation et de retenue du sac (2) sur la colonne (8), le dispositif de fixation inférieure (14) étant pourvu d'un organe d'appui (25) de la paroi (15) de fond du sac, **caractérisé en ce qu'**au moins l'un des dispositifs de fixation supérieur (13) et inférieur (14) comporte, disposé en partie sur la colonne (8) et en partie sur le sac de golf (2), des moyens de fixation rapide par engagement et désengagement mutuels par un mouvement du sac.

2. Equipement de golf selon la revendication 1, **caractérisé en ce que** le dispositif de fixation inférieur (14) est formé par des moyens prévus sur la face extérieure de la paroi de fond (15) du sac de golf (2) et l'organe d'appui (21) et qui comportent au moins un élément en saillie (25) et un élément en creux (22) de réception de l'élément en saillie (25).

3. Equipement de golf selon la revendication 2, **caractérisé en ce que** l'élément en saillie (25) est un plot prévu sur la paroi de fond (15) du sac ou l'organe d'appui (21) et l'élément en creux (22) est un trou de forme complémentaire à la forme du plot, prévu dans l'organe d'appui (21) ou la paroi de fond (15).

4. Equipement de golf selon l'une des revendications 2 ou 3, **caractérisé en ce que** les éléments en saillie (25) et en creux (22) présentent des formes tronconiques complémentaires.

5. Equipement de golf selon l'une des revendications 1 à 4, **caractérisé en ce que** le dispositif de fixation supérieur (13) comporte des moyens mâles (16) et femelles (18) prévus soit sur la colonne (8) du chariot (1) ou la surface périphérique cylindrique du sac de golf (2), qui coopèrent et sont du type à engagement et désengagement par un mouvement axial du sac.

6. Equipement de golf selon la revendication 5, **caractérisé en ce que** les moyens femelles comportent au moins une douille (18) et les moyens mâles au moins un axe (16), la douille et l'axe étant orientés sensiblement parallèlement à la colonne (8) et la douille étant susceptible d'être emanchée sur l'axe.

7. Equipement de golf selon la revendication 6, **caractérisé en ce que** les moyens femelles comportent deux douilles (18) et les moyens mâles deux axes (16).

8. Equipement de golf selon l'une des revendications 6 ou 7, **caractérisé en ce que** les douilles (18) sont prévues sur la face périphérique du sac de golf (2) et les axes (16) sont solidaires de la colonne (8) et situés de part et d'autre de celle-ci.

9. Equipement de golf selon la revendication 8, **caractérisé en ce que** les deux axes (16) sont fixés sur une plaque de support (12) solidaire de la colonne (8).

10. Equipement de golf selon l'une des revendications 1 à 4, **caractérisé en ce que** le dispositif de fixation supérieur (13) comporte au moins un organe en forme d'agrafe (31) élastiquement déformable, prévu sur le sac de golf (2) ou la colonne (8), et un organe de réception de cette agrafe, prévu sur la colonne (8) ou le sac (2), l'engagement et le désengagement de l'agrafe se faisant par un mouvement sensiblement perpendiculaire à la colonne.

11. Equipement de golf selon la revendication 10, **caractérisé en ce que** le dispositif de fixation supérieur (13) comporte deux agrafes (31), chacune disposée à l'extrémité d'un support (30) fixée par sa base sur la face périphérique extérieure du sac (2) ou sur la colonne (7).

12. Equipement de golf selon l'une des revendications 10 ou 11, **caractérisé en ce que** l'organe de réception de l'agrafe (31) est un axe (16) s'étendant sensiblement parallèlement à la colonne (8) et avantageusement pourvu d'une rainure annulaire (32) de réception de l'agrafe représentant alors avantageusement la forme d'un C dont la largeur de l'ouverture est élastiquement variable.

13. Equipement de golf selon l'une des revendications 5 à 12, **caractérisé en ce que** le dispositif de fixation inférieur (14) comporte un élément en forme d'agrafe élastiquement déformable, prévu sur le sac (2) ou la colonne (8) et un élément de réception de l'agrafe, prévu sur la colonne (8) ou le sac (2).

14. Equipement de golf selon la revendication 13, **caractérisé en ce que** le dispositif de fixation supérieur (13) comporte également au moins une agrafe (31) et un élément de réception (16) de l'agrafe, les agrafes étant engageables et désengageables de leur élément de réception par un mouvement sensiblement perpendiculaire à la colonne (8), une butée d'immobilisation axiale du sac (2) étant prévue sur la colonne (8).

15. Equipement selon l'une des revendications 1 à 14, **caractérisé en ce que** la position des moyens de fixation (16, 17) prévus sur la colonne (8) est variable le long de celle-ci.
